# EUROPEAN PATENT APPLICATION

(11) **EP 4 318 412 A1**
(43) Date of publication of application: **07.02.2024**
(21) Application number: 22774864.7
(22) Date of filing: 22.02.2022
(51) Int. Cl.: G06V 30/12, G06F 3/0481, G06V 30/424

(54) **INFORMATION PROCESSING DEVICE AND INFORMATION INPUT SYSTEM**

(30) Priority: 22.03.2021 JP 2021047481
(71) Applicant: KABUSHIKI KAISHA TOSHIBA, Minato-ku Tokyo 105-0023 (JP); Toshiba Infrastructure Systems & Solutions Corporation, Kawasaki-shi, Kanagawa 212-0013 (JP)
(72) Inventor: SATO, Masataka, Kawasaki-shi, Kanagawa 212-0013 (JP); ASAHI, Kazutaka, Kawasaki-shi, Kanagawa 212-0013 (JP)
(74) Representative: Horn Kleimann Waitzhofer Schmid-Dreyer Patent- und Rechtsanwälte PartG mbB
(86) International application number: PCT/JP2022/007306
(87) International publication number: WO 2022/202064

(57) **Abstract**

According to an embodiment, an information processing apparatus includes an image interface, an input interface, an input terminal interface, a recognition unit, and a processor. The image interface is configured to acquire a display image including an image to be processed that an external apparatus causes a display apparatus to display. The recognition unit is configured to recognize a character string in the image to be processed included in the display image acquired by the image interface. The processor is configured to, in a case where additional information is necessary for first input information recognized from the image to be processed by the recognition unit, request the input terminal to input the first input information and input the additional information based on the image to be processed, and provide the external apparatus through the input interface with information indicating the first input information and the additional information input by the input terminal.

## Description

### FIELD

Embodiments described herein relate generally to an information processing apparatus and an information input system.

### BACKGROUND

Conventionally, there is a video coding desk (VCD) in which an image of an article is displayed on a screen to acquire information indicating a destination such as an address described in the article, and an operator inputs the information described in the article based on the displayed image. Furthermore, a technique has been devised for adding a new information input system that inputs information in place of the operator to the existing VCD. The new information input system captures an image of a screen displayed by the existing VCD, emulates information indicating a destination of an article specified from the captured image as an operation signal of an input apparatus in the existing VCD, and provides the existing VCD with the information.

The information input system connected to the existing VCD includes an OCR apparatus that performs optical character recognition (OCR) processing, and a new input terminal for an operator to input information if recognition by the OCR apparatus fails. That is, in the information input system connected to the existing VCD, the OCR apparatus and the new input terminal input information such as a destination in place of the input device of the existing VCD.

The existing VCD has a function of requesting the operator to input additional information such as information indicating a recipient name in a case where the address is the place where a person who moved out exists. If such a function of inputting the additional information is incorporated into the new information input system as it is, an operator of the new input terminal of the new information input system needs to do a work of inputting the additional information (for example, a recipient name) with respect to predetermined information such as an address suddenly obtained by OCR processing. Since the operator of the new input terminal repeatedly performs the work of inputting the predetermined information in a short time by looking at the image to be processed for which the OCR processing has failed, when the operator is suddenly required to input information different from the predetermined information, the operator may be confused in the work, or the operator may be forced to perform an operation such as unexpected movement of the line of sight, resulting in a decrease in work efficiency.

### CITATION LIST

### PATENT LITERATURE

Patent Literature 1: Jpn. Pat. Appln. KOKAI Publication No. 2008-90536

### SUMMARY

### TECHNICAL PROBLEM

In order to solve the above problems, the present invention provides an information processing apparatus and an information input system capable of improving efficiency of information input work.

### SOLUTION TO PROBLEM

According to an embodiment, an information processing apparatus includes an image interface, an input interface, an input terminal interface, a recognition unit, and a processor. The image interface is configured to acquire a display image including an image to be processed that an external apparatus causes a display apparatus to display. The input interface is configured to provide the external apparatus with a signal indicating input information for the display image. The input terminal interface is configured to be connected to an input terminal including a display device and an input device. The recognition unit is configured to recognize a character string in the image to be processed included in the display image acquired by the image interface. The processor is configured to, in a case where additional information is necessary for first input information recognized from the image to be processed by the recognition unit, request the input terminal to input the first input information and input the additional information based on the image to be processed, and provide the external apparatus through the input interface with information indicating the first input information and the additional information input by the input terminal.

### BRIEF DESCRIPTION OF THE DRAWINGS

FIG. 1 is a diagram schematically illustrating a configuration example of an information input system according to an embodiment.
FIG. 2 is a block diagram illustrating a configuration example of an existing VCD connected to the information input system according to an embodiment.
FIG. 3 is a block diagram illustrating a configuration example of an OCR apparatus in the information input system according to an embodiment.
FIG. 4 is a diagram illustrating an example of a VCD screen captured by the OCR apparatus in the information input system according to an embodiment.
FIG. 5 is a diagram illustrating an example of a case where additional information is requested on a VCD screen captured by the OCR apparatus in the information input system according to an embodiment.
FIG. 6 is a flowchart for describing a first operation example of the OCR apparatus in the information input system according to an embodiment.
FIG. 7 is a flowchart for describing a second operation example of the OCR apparatus in the information input system according to an embodiment.

### DETAILED DESCRIPTION

Hereinafter, embodiments will be described with reference to the drawings.

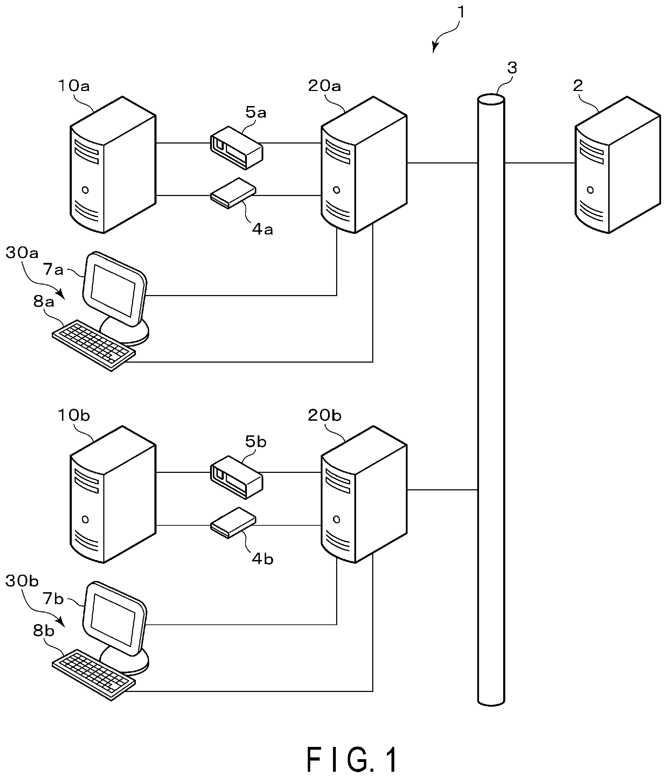

FIG. 1 is a diagram schematically illustrating a configuration example of an information input system 1 according to the embodiment.

The information input system 1 according to the embodiment specifies information (for example, destination information) including a character string such as a postal code, an address, and a recipient name in an image to be processed, and is connected to an existing VCD 10 that provides the specified information to an apparatus such as a classifying apparatus or an article processing apparatus. The information input system 1 is a system that captures an image of a display screen (VCD screen) including an image to be processed generated by the existing VCD 10, and provides information (destination information) input by OCR processing or keystroke-input processing to the existing VCD 10 based on the captured VCD screen.

As illustrated in Fig. 1, the information input system 1 includes a management PC 2, a network 3, an emulator 4, a capture board 5, an OCR apparatus 20, and a new input terminal 30 (a display device 7, an operation device 8).

The OCR apparatus 20 is an information processing apparatus and a recognition apparatus. The OCR apparatus 20 is connected to the existing VCD 10 via the emulator 4 and the capture board 5. The display device 7 and the operation device 8 are devices that function as the new input terminal 30 for the operator to input information. The display device 7 and the operation device 8 as the new input terminal 30 are connected to the OCR apparatus 20. In addition, the OCR apparatus 20 is also connected to management PC 2 via network 3.

In addition, FIG. 1 illustrates a configuration example of the information input system 1 in which the OCR apparatus 20 (20a, 20b) and the new input terminal 30 (30a, 30b) are provided corresponding to each existing VCD 10 (10a, 10b).

The plurality of OCR apparatuses 20a and 20b are connected to the existing VCDs 10a and 10b via the plurality of emulators 4a and 4b and the capture boards 5a and 5b, respectively. In addition, the new input terminals 30a and 30b include display devices 7a and 7b and operation devices 8a and 8b, respectively, and are connected to the OCR apparatuses 20a and 20b.

The existing VCD 10 (10a, 10b) is an input apparatus provided in an existing video coding system (VCS). The existing VCD 10 is connected to an article processing apparatus, such as a classifying system, that classify articles, such as mail or baggage, based on the destinations listed (displayed) on the articles. The existing VCD 10 acquires an image of an article to be subjected to classifying processing read by the article processing apparatus with a camera, a scanner, or the like, and causes a display apparatus to display a display image for destination input including the image of the article as the image to be processed. The existing VCD 10 provides an article processing apparatus, such as a classifying system, with information indicating the input destination.

The management PC 2 is connected to the network 3. The management PC 2 manages the entire input system 1. The management PC 2 transmits and receives data to and from the OCR apparatus 20. The management PC 2 transmits various signals and the like to the OCR apparatus 20 and the like. In addition, the management PC 2 receives data (such as a result of OCR processing) from the OCR apparatus 20. The network 3 relays communication between the management PC 2 and the OCR apparatus 20, communication between the OCR apparatuses 20, and the like. For example, the network 3 is a local area network (LAN) or the like.

The emulator 4 (4a, 4b) emulates an input apparatus such as a keyboard or a mouse connected to the existing VCD 10. The emulator 4 provides the existing VCD 10 with a signal indicating a destination input from the OCR apparatus 20 as an operation signal similar to the operation signal in a case of being input to the existing input apparatus. For example, the emulator 4 converts a signal input from the OCR apparatus 20 into an operation signal indicating movement or clicking of a mouse, keyboard input, or the like, and provides the existing VCD 10 with the operation signal.

In the configuration example illustrated in FIG. 1, the emulator 4a provides the existing VCDa with a signal from the OCR apparatus 20a as an operation signal of an input apparatus in the existing VCD 10a. In addition, the emulator 4b provides the existing VCD 10b with a signal from the OCR apparatus 20b as an operation signal of an input apparatus in the existing VCD 10b.

The capture board 5 (5a, 5b) captures a display image (VCD screen) including an image to be processed displayed on the display apparatus by the existing VCD 10 (10a, 10b). The capture board 5 (5a, 5b) supplies the display image captured by the existing VCD 10 (10a, 10b) to the OCR apparatus 20 (20a, 20b). In the configuration example illustrated in FIG. 1, the capture board 5a captures the VCD screen generated by the existing VCD 10a, and provides the OCR apparatus 20a with the captured VCD screen. The capture board 5b captures the VCD screen generated by the existing VCD 10b, and provides the OCR apparatus 20b with the captured VCD screen.

The OCR apparatus 20 (20a, 20b) includes a recognition unit that performs OCR processing (character recognition processing) of recognizing a character string in an image of an article. The OCR apparatus 20 is connected to the capture board 5 (5a, 5b). The OCR apparatus 20 (20a, 20b) acquires a display image of the existing VCD 10 (10a, 10b) captured by the capture board 5 (5a, 5b). The OCR apparatus 20 performs OCR processing for recognizing a character string indicating a destination described in an article based on the image of the article included in the acquired display image of existing VCD 10 (10a, 10b).

If the OCR processing succeeds, the OCR apparatus 20 provides the existing VCD 10 with information including the character string (destination) obtained as a result of the OCR processing through the emulator 4. In addition, if the OCR processing fails in the recognition, the OCR apparatus 20 causes the display device 7 as the new input terminal 30 to display the display image including the image of the article acquired from the existing VCD 10, and receives a key input to the operation device 8 by the operator. The OCR apparatus 20 acquires information input by the operator in the operation device 8 as the new input terminal 30. Upon acquiring the information input to the operation device 8, the OCR apparatus 20 provides the existing VCD 10 with the information input to the operation device 8 via the emulator 4 .

The display device 7 displays a VCD screen and the like. The display device 7 displays an image requested by the OCR apparatus 20. The display device 7 is, for example, a liquid crystal display or an organic EL display. In the configuration example illustrated in FIG. 1, a display device 7a displays an image under the control of OCR apparatus 20a. In addition, a display device 7b displays an image under the control of OCR apparatus 20b.

The operation device 8 receives an input of an operation instruction from the operator. The operation device 8 transmits an operation signal indicating the input operation to the OCR apparatus 20. The operation device 8 includes, for example, a keyboard or a mouse. In the configuration example illustrated in FIG. 1, the operation device 8a provides the OCR apparatus 20a with an operation signal indicating the input operation. Further, the operation device 8b provides the OCR apparatus 20b with an operation signal indicating the input operation.

Note that the display device 7 and the operation device 8 function as the input terminal 30 in the information input system 1. The display device 7 and the operation device 8 may be included in an information processing apparatus such as a PC, or may be devices individually connected to the OCR apparatus 20. That is, the display device 7 only needs to display an image provided from the OCR apparatus 20, and the operation device 8 only needs to provide information input by the operator for the OCR apparatus 20.

Next, a configuration of the existing VCD 10 to which the information input system 1 according to the embodiment is connected will be described.

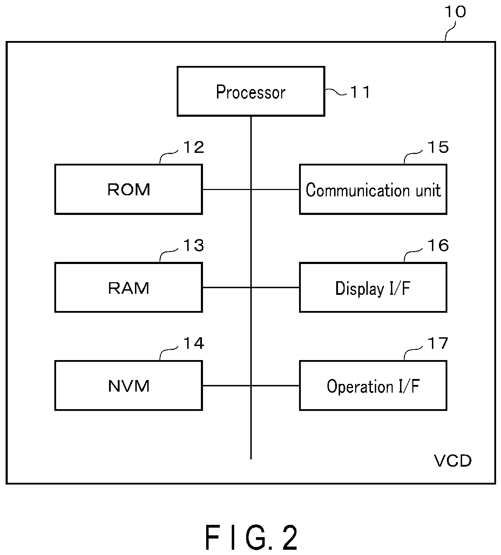

FIG. 2 is a block diagram illustrating a configuration example of the existing VCD 10 connected to the information input system 1 according to the embodiment.

As illustrated in FIG. 2, the existing VCD 10 includes a processor 11, a ROM 12, a RAM 13, an NVM 14, a communication unit 15, a display interface 16, an operation interface 17, and the like. Note that the existing VCD 10a and the existing VCD 10b have the same configuration, and will be described as the existing VCD 10.

In the existing VCD 10, the ROM 12, the RAM 13, the NVM 14, the communication unit 15, the display interface 16, and the operation interface 17 are connected to the processor 11 via a data bus or the like. Note that the existing VCD 10 may have a configuration as necessary in addition to the configuration as illustrated in FIG. 2, or a specific configuration may be excluded from the existing VCD 10.

The processor 11 has a function of controlling the entire operation of the existing VCD 10. The processor 11 may include an internal cache, various interfaces, and the like. The processor 11 realizes various processes by executing a program stored in advance in the internal memory, the ROM 12, or the NVM 14.

Note that some of the various functions implemented by the processor 11 executing the program may be implemented by a hardware circuit. In this case, the processor 11 controls the functions executed by the hardware circuit.

The ROM 12 is a nonvolatile memory in which a control program, control data, and the like are stored in advance. The control program and the control data stored in the ROM 12 are incorporated in advance according to the specification of the VCD 10.

The RAM 13 is a volatile memory. The RAM 13 temporarily stores data and the like being processed by the processor 11. The RAM 13 stores various application programs based on instructions from the processor 11. In addition, the RAM 13 may store data necessary for execution of the application program, an execution result of the application program, and the like.

The NVM 14 is a non-volatile memory capable of writing and rewriting data. For example, the NVM 14 may include, for example, an HDD, an SSD, a flash memory, or the like. The NVM 14 stores a control program, an application, various data, and the like according to the operation application of the VCD 10.

The communication unit 15 is an interface for transmitting and receiving data to and from a predetermined processing apparatus. For example, the communication unit 15 is an interface that supports wired or wireless LAN connection.

The display interface 16 is connected to the capture board 5. The display interface 16 is an interface that transmits and receives data to and from the capture board 5. The display interface 16 transmits the display screen (VCD screen) displayed on the display apparatus to the capture board 5 according to the control of the processor 11.

The operation interface 17 is connected to the emulator 4. The operation interface 17 is an interface for receiving an input of an operation instruction indicating information input to the input apparatus. For example, the operation interface 17 receives an operation signal indicating an operation input to an operation device such as a keyboard or a mouse. The operation interface 17 provides the processor 11 with the received operation signal. For example, the operation interface 17 supports universal serial bus (USB) connection. The operation interface 17 illustrated in FIG. 2 is connected to the emulator 4 and receives an operation signal from the emulator 4.

The processor 11 of the VCD 10 acquires an image of an article, which is an image to be processed, from an article processing apparatus such as a classifying system through the communication unit 15. Upon acquiring the image to be processed, the processor 11 generates a VCD screen that receives an input of a character string such as an address in the image of the article. The VCD screen is a display image including the image to be processed. The VCD screen is designed to be displayed on an existing display apparatus visually recognized by an operator who inputs information such as an address. In the present embodiment, the processor 11 outputs the generated VCD screen to the capture board 5 through the display interface 16.

After outputting the VCD screen to the capture board 5, the processor 11 receives an input of an operation signal such as information indicating a destination through the operation interface 17. The processor 11 acquires a signal (an operation signal indicating a key input or the like), which is similar to the signal input from the existing operation device, from the emulator 4 through the operation interface 17.

Upon receiving an operation signal whose input is determined (for example, an operation signal in which the enter key is pressed, or the like) through the operation interface 17, the processor 11 provides the article processing apparatus with the input information by the communication unit 15 if the input information is sufficient as information indicating a destination. If the input information is not sufficient as the information indicating the destination, the processor 11 requests the OCR apparatus 20 once again to input the information indicating the destination.

As an example, in a case where the address as the input information is the address where a person who moved out exists, the processor 11 provides the OCR apparatus 20 with information specifying the person of the destination indicated by the recipient name as the additional information. For example, the processor 11 requests for input of additional information by providing the OCR apparatus 20 again with the VCD screen including an additional instruction field for requesting input of additional information (selection of recipient name) via the capture board 5.

Next, a configuration of the OCR apparatus 20 in the information input system 1 according to the embodiment will be described.

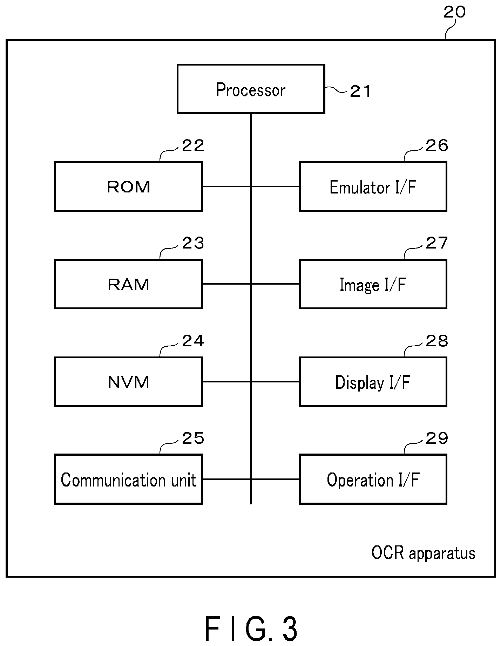

FIG. 3 is a block diagram illustrating a configuration example of the OCR apparatus 20 in the information input system 1 according to the embodiment.

As illustrated in FIG. 3, the OCR apparatus 20 includes a processor 21, a ROM 22, a RAM 23, an NVM 24, a communication unit 25, an emulator interface 26, an image interface 27, a display interface (display device interface) 28, an operation interface (operation device interface) 29, and the like.

The ROM 22, the RAM 23, the NVM 24, the emulator interface 26, the image interface 27, the display interface 28, and the operation interface 29 are mutually connected to the processor 21 via a data bus or the like. Note that the OCR apparatus 20 may have a configuration as necessary in addition to the configuration as illustrated in FIG. 3, or a specific configuration may be excluded from the OCR apparatus 20.

The processor 21 has a function of controlling the entire operation of the OCR apparatus 20. The processor 21 may include an internal cache, various interfaces, and the like. The processor 21 realizes various processes by executing a program stored in advance in the internal memory, the ROM 22, or the NVM 24.

Note that some of the various functions implemented by the processor 21 executing the program may be implemented by a hardware circuit. In this case, the processor 21 controls the functions executed by the hardware circuit.

The ROM 22 is a nonvolatile memory in which a control program, control data, and the like are stored in advance. The control program and the control data stored in the ROM 22 are incorporated in advance according to the specification of the OCR apparatus 20.

The RAM 23 is a volatile memory. The RAM 23 temporarily stores data and the like being processed by the processor 21. The RAM 23 stores various application programs based on instructions from the processor 21. In addition, the RAM 23 may store data necessary for execution of the application program, an execution result of the application program, and the like.

The NVM 24 (storage unit) is a non-volatile memory capable of writing and rewriting data. The NVM 24 includes, for example, an HDD, an SSD, a flash memory, or the like. The NVM 24 stores a control program, an application program, various data, and the like for realizing an operation to be described later of the OCR apparatus 20.

For example, the NVM 24 stores a program for acquiring a VCD screen from the existing VCD 10, a program for operating as a recognition unit, a program for providing the existing VCD 10 with a recognition result, a program whose necessity is detected by additional - information, a control program for additional information to cause to be input, and the like.

The communication unit 25 (image interface, input interface) is an interface for transmitting and receiving data to and from the management PC 2 or another OCR apparatus 20. The communication unit 25 is connected to the network 3. For example, the communication unit 25 is an interface that supports wired or wireless LAN connection.

The emulator interface 26 (input interface) is an interface that transmits and receives data to and from the emulator 4. The emulator interface 26 causes the emulator 4 to output an operation signal corresponding to a predetermined operation device to the existing VCD 10 according to the control of the processor 21. For example, the emulator interface 26 supports USB connection.

The image interface 27 is an interface that transmits and receives data to and from the capture board 5. The image interface 27 acquires the VCD screen from the capture board 5. The image interface 27 provides the acquired VCD screen for the processor 21.

The display interface 28 is an interface connected to the display device 7. The display interface 28 is an input terminal interface connected to the display device 7 as the new input terminal 30. The display interface 28 transmits and receives data to and from the display device 7 as the new input terminal 30. For example, the display interface 28 provides image information to be displayed on the display device 7 according to the control of the processor 21.

The operation interface 29 is an interface connected to the operation device 8. The operation interface 29 is an input terminal interface connected to the operation device 8 as the new input terminal 30. The operation interface 29 transmits and receives data to and from the operation device 8 as the new input terminal 30. The operation interface 29 receives an operation signal indicating an operation input to an operation device 8. The operation interface 29 provides the received operation signal for the processor 21. For example, the operation interface 29 supports USB connection.

Note that the emulator interface 26, the image interface 27, the display interface 28, and the operation interface 29 (or a part thereof) may be integrally formed. In addition, the display interface 28 and the operation interface 29 may be one new input terminal interface for being connected to one computer terminal as the new input terminal 30.

Next, functions of the OCR apparatus 20 according to the embodiment will be described.

The functions of the OCR apparatus 20 according to the embodiment are implemented by the processor 21 executing a program stored in the ROM 22, the NVM 24, or the like. Hereinafter, various functions realized by the processor 21 executing a program will be described.

First, as a function of the OCR apparatus 20 according to the embodiment, a function of acquiring a VCD screen generated by the existing VCD 10 will be described.

In the OCR apparatus 20 according to the embodiment, the processor 21 executes a program to realize a function of acquiring the VCD screen generated by the existing VCD 10.

Upon acquiring an image to be processed from an article processing apparatus or the like, the existing VCD 10 generates a VCD screen including the image to be processed. The existing VCD 10 outputs the generated VCD screen to the display interface 16. The VCD screen is a display screen for inputting a character string to be coded to be specified.

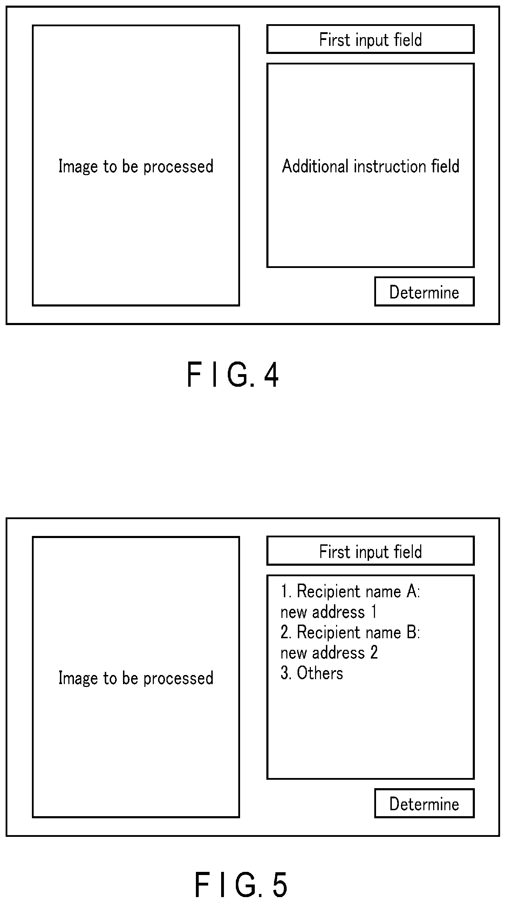

FIG. 4 is a diagram illustrating an example of the VCD screen generated by the existing VCD 10.

In the example illustrated in FIG. 4, a display field of the image to be processed, a first input field, an additional instruction field, a determination key, and the like are displayed on the VCD screen.

The image to be processed is an image including a character string to be coded. For example, the image to be processed is an image of an article on which a character string including an address (first character string as first input information), a recipient name (second character string as additional information), and the like is described (displayed). The first input field is a display field that displays the first input information such as an address which must be input.

The additional instruction field is a display field for inputting additional information in a case where it is necessary to input the additional information. If additional information is required for the information input in the first input field, input of additional information to the additional instruction field is required. For example, in a case where additional information is required, options to be selected as the additional information is displayed in the additional instruction field.

The determination key is an icon instructed to determine the information input in the first input field or the additional display field. In the present embodiment, information is input into the first input field and the additional instruction field by the emulator 4 connected to the OCR apparatus 20. The determination key is instructed and input by the emulator 4 connected to the OCR apparatus 20.

As illustrated in FIG. 1, the capture board 5 connected to the OCR apparatus 20 is connected to the display interface 16 of the existing VCD 10. The capture board 5 captures the VCD screen output from the existing VCD 10 to the display interface. The capture board 5 provides the VCD screen captured by the existing VCD 10 for the image interface 27 of the OCR apparatus 20.

The processor 21 of the OCR apparatus 20 acquires the VCD screen generated by the existing VCD 10 from the capture board 5 through the image interface 27. For example, the processor 21 acquires the VCD screen of the existing VCD 10 at predetermined intervals (for example, 1 second). Further, the processor 21 may acquire the VCD screen when a change occurs in the VCD screen (when a VCD image of a next image to be processed is displayed or when an additional instruction (an input request for additional information) is displayed on the VCD screen). For example, the processor 21 may determine whether a change has occurred in the VCD screen according to an image processing algorithm or the like.

Next, as a function of the OCR apparatus 20 according to the embodiment, a function as a recognition unit that recognizes a character string in an image to be processed will be described.

In the OCR apparatus 20 according to the embodiment, the processor 21 functions as a recognition unit realized by executing a recognition program.

The processor 21 operates as a recognition unit by executing a recognition program for performing OCR processing of recognizing a character string in an image to be processed stored in the NVM 24 or the like. In the OCR apparatus 20, the recognition program executed by the processor 21 executes OCR (secondary OCR, offline OCR) processing of an algorithm different from the one of OCR (primary OCR, online OCR) processing executed by an apparatus such as an article processing apparatus connected to the existing VCD 10.

The processor 21 obtains destination information from the VCD screen by performing the OCR processing as secondary OCR. Further, the processor 21 may execute a plurality of recognition programs for each piece of information to be authenticated. For example, as the recognition program, a first recognition program for recognizing a specific first character string (for example, an address) and a second recognition program for recognizing a second character string (for example, a recipient name) may be stored in the NVM 24.

Upon acquiring the VCD screen from the existing VCD 10, the processor 21 as a recognition unit that executes the recognition program extracts an image in an image region to be recognized (recognition target region) including a subjected character string from the VCD screen according to a format acquired in advance or the like. In the first recognition program (first OCR processing) as described above, a region in which the first character string is described may be extracted as the recognition target region, and in the second recognition program (second OCR processing), a region in which the second character string is described may be extracted as the recognition target region.

Upon extracting the image of the recognition target region, the processor 21 performs OCR processing on the image of the recognition target region according to the algorithm as the secondary OCR described above. The algorithm of the secondary OCR can recognize at least a part of a character image that the algorithm of the primary OCR cannot recognize. By executing such OCR processing, the processor 21 acquires information indicating a character string (for example, a first character string) in the image to be processed based on a result of the OCR processing.

Note that the processor 21 may perform predetermined processing on the VCD screen or the image of the authentication target region before performing the OCR processing. For example, the processor 21 may enlarge or reduce the image of the VCD screen or the recognition target region. Furthermore, the processor 21 may perform processing of removing noise or the like on the VCD screen or the image of the recognition target region.

Next, as a function of the OCR apparatus 20 according to the embodiment, a function of providing information for the existing VCD 10 using the emulator 4 will be described.

In the OCR apparatus 20 according to the embodiment, the processor 21 has a function of providing the existing VCD 10 with information acquired by OCR processing using the emulator 4 or information input to the new input terminal 30.

For example, if the recognition by the OCR processing succeeds, the processor 21 provides the existing VCD 10 with information obtained by the OCR processing using the emulator 4. In a case where the operator inputs (keystroke-inputs) information indicating a character string in the image to be processed by the operation device 8 as the new input terminal 30 connected to the OCR apparatus 20, the processor 21 provides the existing VCD 10 with the keystroke input information via the emulator 4.

The emulator 4 performs emulation to convert information obtained by OCR processing or information input (keystroke-input) by the operator into an operation signal input to an operating device (for example, a keyboard or a mouse) of the existing VCD 10. The existing VCD 10 acquires information provided from the OCR apparatus 20 (information obtained by OCR processing or keystroke-input information) from the operation interface 17 as a signal (operation signal) input to the operation device by the emulator 4.

Next, as a function of the OCR apparatus 20 according to the embodiment, a function of causing an operator to input information using the new input terminal 30 will be described.

In the OCR apparatus 20 according to the embodiment, the processor 21 realizes a function of causing the operator to input information using the new input terminal 30 by executing a program. For example, if the OCR processing fails, the processor 21 receives information input to the VCD screen using the new input terminal 30.

If the OCR processing on the VCD screen acquired from the existing VCD 10 fails, the processor 21 displays the acquired VCD screen on the display device 7 as the new input terminal 30. The VCD screen displayed on the display device 7 is, for example, a screen as illustrated in FIG. 4. In a state where the VCD screen is displayed on the display device 7, input of a character string (zip code, city block, street, or the like) in the image to be processed by the operation device 8 is received.

Here, the operator of the new input terminal 30 visually checks the destination image on the VCD screen displayed on the display device 7 and inputs the destination to the operation device 8. When the input of the destination is completed, the operator inputs an operation for completing the input to the operation device 8.

When the operator inputs a key to the operation device 8, the processor 21 receives an operation signal indicating the key input from the operation device 8 through the operation interface 29. The processor 21 transmits an operation signal for inputting the key to the operation interface 17 of the VCD 10 using the emulator 4.

The processor 11 of the VCD 10 receives an operation signal from the emulator 4 through the operation interface 17. Upon receiving the operation signal, the processor 11 generates a VCD screen (display image) in which a character string based on the operation signal is displayed on the input form. Upon generating the VCD screen, the processor 11 provides the capture board 5 with the VCD screen through the display interface 16.

The capture board 5 captures the VCD screen (display image) output to the display interface 16 of the existing VCD 10, and provides the captured VCD image for the OCR apparatus 20.

The processor 21 of the OCR apparatus 20 acquires the VCD screen from the capture board 5 through the image interface 27. Upon acquiring the VCD screen, the processor 21 displays the VCD screen (the VCD screen displaying the character string input to the input form or the like) on the display device 7 through the display interface 28.

The processor 21 of the OCR apparatus 20 repeats the operation described above, and causes the operator to perform the input work of the information until the input of the information requested by the existing VCD 10 is completed.

Next, as a function of the OCR apparatus 20 according to the embodiment, there is a function of detecting that additional information is required for information obtained by OCR processing.

In the OCR apparatus 20 according to the embodiment, the processor 21 realizes a function of detecting that additional information is necessary for information obtained by OCR processing by executing a program.

For example, it is assumed that the existing VCD 10 needs the second character string (for example, recipient name) as the additional information for the first character string (for example, the address) as the first input information obtained by the OCR processing. If the additional information is required for the information obtained by OCR processing, the OCR apparatus 20 according to the present embodiment may perform processing of once clearing the OCR processing as described later. Therefore, the processor 21 has a function of detecting that the additional information is necessary for the information obtained by the OCR processing.

As an algorithm for detecting that the additional information is necessary, information indicating that the additional information (information of the second character string) is necessary is acquired from the existing VCD 10 that has provided the recognition result of the first character string by the OCR processing. In this case, the program for detecting the additional information may be an algorithm for detecting that the existing VCD 10 that has provided the recognition result of the OCR processing displays the input field (additional instruction field) of the additional information.

FIG. 5 is a diagram illustrating an example of a case where additional information is requested on the VCD screen generated by the existing VCD 10.

In the example illustrated in FIG. 5, options indicating information to be selected as the additional information is displayed in the additional instruction field on the VCD screen. In the VCD screen illustrated in FIG. 5, a selection screen for selecting a person who moved out is displayed in the additional instruction field with respect to the address input in the first input field. In the example shown in FIG. 5, in the additional instruction field, "1. Recipient name A" and "2. Recipient name B" are options for selecting a person who moved out, and "3. Others" is an option for selecting a current resident. For example, in an apartment building or the like, there may be a plurality of persons who moved out at the same address. If the plurality of persons who moved out are set to the same address as described above, it is conceivable to display an additional instruction field in which a person who moved out can be selected from candidates of the plurality of persons who moved out as illustrated in FIG. 5.

It is assumed that the information indicating the person who moved out as described above is recorded in a moved-out person database accessible by the existing VCD 10 in the existing VCS (video coding system) including the existing VCD 10. As such a moved-out person database, it is conceivable to store data indicating a person who moved out (a recipient name corresponding to the second character string) associated with an address as the first input information (first character string).

In a case where the above configuration is assumed, the processor 21 detects that it is necessary to input additional information from the VCD screen acquired from the existing VCD 10. For example, if information to be selected (input) as the additional information is displayed in the additional instruction field as illustrated in FIG. 5 on the VCD screen acquired from the existing VCD 10, the processor 21 may detect that it is necessary to input the additional information.

In addition, the program for detecting the additional information may be an algorithm by which the processor 21 of OCR apparatus 20 determines the presence or absence of the additional information (second character string) according to the recognition result of the first character string by the OCR processing. In this case, it is necessary to have a configuration in which the processor 21 can access a database (for example, the moved-out person database) for determining necessity of the additional information for the recognition result of the OCR processing. For example, the OCR apparatus 20 may include a database that stores data indicating the first input information (the first character string such as an address) of a recognition target that requires additional information (the second character string such as a recipient name) (or may be configured to be able to access the database).

Next, an operation example of the OCR apparatus 20 in the information input system according to the embodiment will be described.

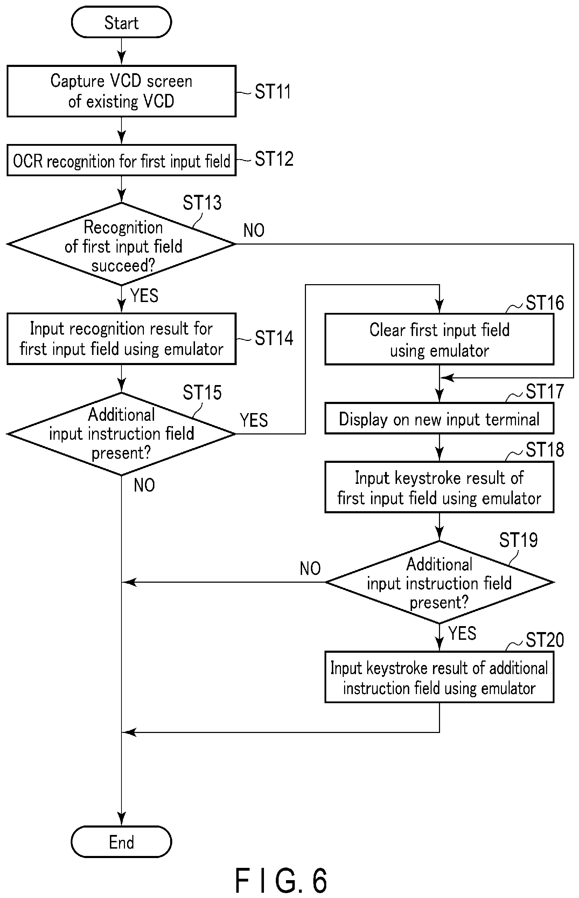

FIG. 6 is a flowchart for describing a first operation example of the OCR apparatus 20 according to the embodiment.

The processor 21 of the OCR apparatus 20 acquires the VCD screen of the existing VCD 10 captured by the capture board 5 through the image interface 27 (ST11). For example, upon acquiring the VCD screen of the existing VCD 10, the processor 21 executes OCR processing for recognizing information for the first input field (the first input information such as an address) as recognition target information (ST12) . The information for the first input field (first input information) is information of the first character string in the image to be processed, and is, for example, information such as an address in the destination information.

If the recognition of the first input information by the OCR processing fails (ST13, NO), the processor 21 proceeds to ST17 and performs keystroke-input processing using a new input terminal 30 described later.

If the recognition of the first input information by the OCR processing succeeds (ST13, YES), the processor 21 uses the emulator 4 to perform emulation operation of inputting the first input information obtained through the OCR processing into the first input field on the VCD screen (ST14) . After inputting the first input information obtained by the OCR processing into the first input field, the processor 21 acquires the VCD screen of the existing VCD 10 captured by the capture board 5 through the image interface, and detects the presence or absence of an input instruction of the additional information (ST15).

For example, the processor 21 detects the presence or absence of the input instruction of the additional information depending on whether or not a screen requesting an input of the additional information in the additional instruction field of the VCD screen generated by the existing VCD 10 is generated. Further, the processor 21 may access a database such as a moving-out information database and determine whether or not it is necessary to input additional information to the first input information obtained by the OCR processing.

If there is no instruction to input the additional information (ST15, NO), the processor 21 assumes that the information input processing for one case of an image to be processed is completed. If the information input processing for the one case of image to be processed is completed, the processor 21 may proceed to ST11 again and perform the information input processing for the next image to be processed.

If there is an instruction to input additional information (ST15, YES), the processor 21 clears the information input in the first input field on the VCD screen of the existing VCD using the emulator 4 (ST16). Here, the processor 21 may further clear the information displayed in the additional instruction field. Furthermore, in a case where image processing such as enlargement or reduction is performed on a part or the entire area of the VCD screen, the processor 21 may perform processing of returning the image processing to the original state.

After clearing the information input in the first input field, the processor 21 displays the VCD screen with the information input in the first input field (first input information) in a cleared state on the display device 7 of the new input terminal 30 (ST17). If the VCD screen with the information in the first input field in a cleared state is displayed on the display device 7, the processor 21 receives an input (keystroke-input) of the first input information to the first input field by the operation device 8 operated by the operator.

If the operator keystroke-inputs the first input information with respect to the first input field by using the operation device 8, the processor 21 performs, by using the emulator 4, an emulation operation of inputting the first input information keystroke-input by using the operation device 8 into the first input field of the VCD screen (ST18) .

After inputting the first input information keystroke-input by using the operation device 8 into the first input field, the processor 21 acquires the VCD screen of the existing VCD 10 captured by the capture board 5 through the image interface, and detects the presence or absence of an input instruction of the additional information (ST19). If there is no instruction to input the additional information (ST19, NO), the processor 21 assumes that the information input processing for one case of an image to be processed is completed.

Further, if there is an instruction to input the additional information (ST19, YES), the processor 21 displays the VCD screen on which the first input information is input in the first input field and the instruction to input the additional information is displayed in the additional instruction field on the display device 7 of the new input terminal 30, and receives the input (keystroke-input) of the additional information to the additional instruction field by the operation device 8 operated by the operator.

If the operator keystroke-inputs the additional information in the additional instruction field by using the operation device 8, the processor 21 performs, by using the emulator 4, an emulation operation of inputting the additional information keystroke-input by using the operation device 8 into the additional instruction field of the VCD screen (ST20). As a result, the first input information and the additional information are input to the VCD screen of the existing VCD 10 connected to the OCR apparatus 20, and the information input processing on the image to be processed is completed.

According to the first operation example as described above, after the OCR processing of the first input information with respect to the image to be processed in the VCD image acquired from the existing VCD succeeds, if the additional information is necessary for the first input information obtained by the OCR processing, the OCR apparatus causes the display device of the new input terminal to display the VCD screen with the first input information input in the first input field by the OCR processing in a cleared state, and receives the input of the first input information and the additional information with respect to the VCD screen.

As a result, it is possible to cause the display device of the new input terminal to display the VCD screen in a state where the operator can easily perform the input if the additional information is necessary. As a result, even if additional information is required, the operator of the new input terminal can continue a simple repetition operation starting from the input of the first input information, and the work efficiency of the operator can be prevented from being lowered.

Next, a second operation example of the OCR apparatus 20 in the information input system according to the embodiment will be described.

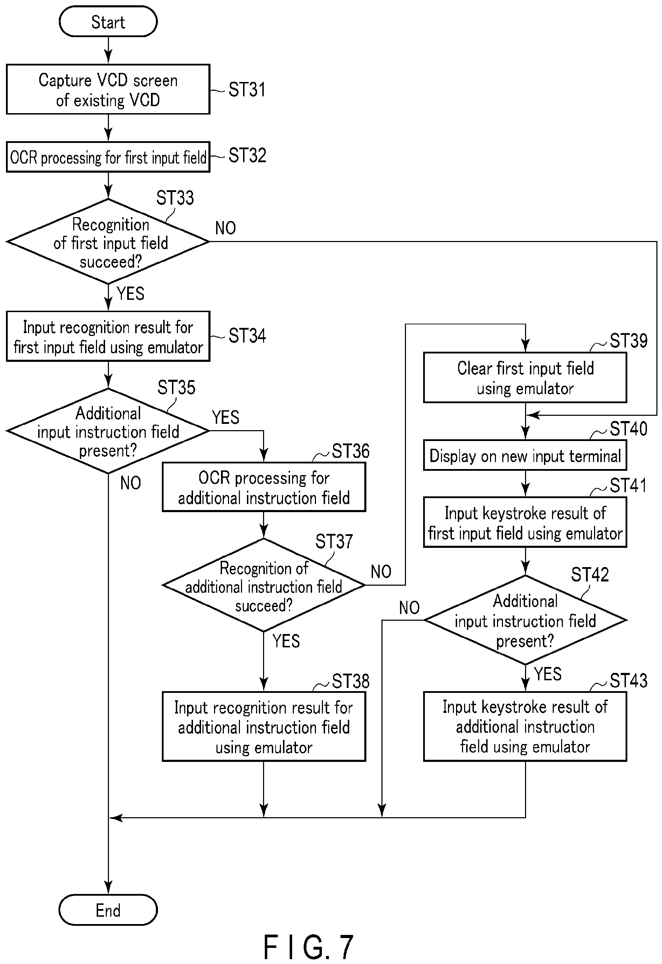

FIG. 7 is a flowchart for describing the second operation example of the OCR apparatus 20 according to the embodiment.

The processor 21 of the OCR apparatus 20 acquires the VCD screen of the existing VCD 10 captured by the capture board 5 through the image interface 27 (ST31). For example, upon acquiring the VCD screen of the existing VCD 10, the processor 21 executes the first OCR processing for recognizing information for the first input field (the first input information such as an address) as the first recognition target information (ST32). Similarly to the first operation example as described above, the information for the first input field (first input information) is information of the first character string in the image to be processed, and is, for example, information such as an address in the destination information.

If the recognition of the first input information by the first OCR processing fails (ST33, NO), the processor 21 proceeds to ST40 and proceeds to keystroke-input processing using a new input terminal 30. If the recognition of the first input information by the first OCR processing succeeds (ST33, YES), the processor 21 uses the emulator 4 to perform emulation operation of inputting the first input information obtained through the OCR processing into the first input field on the VCD screen (ST34). After inputting the first input information obtained by the OCR processing into the first input field, the processor 21 acquires the VCD screen of the existing VCD 10 captured by the capture board 5 through the image interface, and confirms the presence or absence of an input instruction of the additional information (ST35).

If there is no instruction to input the additional information (ST35, NO), the processor 21 assumes that the information input processing for one case of an image to be processed is completed. If the information input processing for the one case of image to be processed is completed, the processor 21 proceeds to ST31 again and performs the information input processing for the next image to be processed.

If there is an input instruction of the additional information (ST35, YES), the processor 21 executes the second OCR processing for recognizing information for the additional instruction field (second character string such as recipient name) that is the second recognition target information (ST36). The information for the additional instruction field is information instructed to be added (additional information) in the additional instruction field. The additional information is information of the second character string in the image to be processed. For example, the additional information is information such as a recipient name for identifying whether the person is like a person who moved out as described above.

If the recognition of the additional information by the second OCR processing succeeds (ST37, YES), the processor 21 uses the emulator 4 to perform emulation operation of inputting the additional information corresponding to the second character string obtained through the second OCR processing into the additional instruction field on the VCD screen (ST38) . As a result, on the VCD screen of the existing VCD 10 connected to the OCR apparatus 20, the first input information is input in the first input field, and the additional information is input in the additional instruction field. As a result, the information input processing with respect to the VCD screen of the existing VCD 10 is completed.

If the recognition of the additional information by the second OCR processing fails (ST37, NO), the processor 21 clears the information input in the first input field on the VCD screen of the existing VCD using the emulator 4 (ST39). Further, the processor 21 may clear the information displayed in the additional instruction field. Furthermore, in a case where image processing such as enlargement or reduction is performed on a part or the entire area of the VCD screen, the processor 21 may perform processing of returning the image processing to the original state.

After clearing the information input in the first input field, the processor 21 displays the VCD screen with the information in the first input field in a cleared state on the display device 7 of the new input terminal 30 (ST40). If the VCD screen with the information in the first input field in a cleared state is displayed on the display device 7, the processor 21 receives an input (keystroke-input) of the first input information into the first input field by the operation device 8 operated by the operator.

If the operator keystroke-inputs the first input information for the first input field by using the operation device 8, the processor 21 performs, by using the emulator 4, an emulation operation of inputting the first input information keystroke-input by using the operation device 8 into the first input field of the VCD screen (ST41).

After inputting the first input information keystroke-input by using the operation device 8 into the first input field, the processor 21 acquires the VCD screen of the existing VCD 10 captured by the capture board 5 through the image interface, and detects the presence or absence of an input instruction of the additional information (ST42). If there is no instruction to input the additional information (ST42, NO), the processor 21 assumes that the information input processing for one case of an image to be processed is completed.

Further, if there is an instruction to input the additional information (ST42, YES), the processor 21 displays the VCD screen on which the first input information is input in the first input field and the instruction to input the additional information is displayed in the additional instruction field on the display device 7 of the new input terminal 30, and receives the input (keystroke-input) of the additional information to the additional instruction field by the operation device 8 operated by the operator.

If the operator keystroke-inputs the additional information in the additional instruction field by using the operation device 8, the processor 21 performs, by using the emulator 4, an emulation operation of inputting the additional information keystroke-input by using the operation device 8 into the additional instruction field of the VCD screen (ST43). As a result, on the VCD screen of the existing VCD 10 connected to the OCR apparatus 20, the first input information is input in the first input field, and the additional information is input in the additional instruction field. As a result, the information input processing to the VCD screen of the existing VCD 10 is completed.

According to the second operation example as described above, after the OCR processing of the first input information with respect to the image to be processed in the VCD image acquired from the existing VCD succeeds, if the additional information is necessary with respect to the first input information obtained by the OCR processing, the OCR apparatus performs the second OCR processing of recognizing the additional information from the image to be processed. If the recognition of the additional information fails, the VCD screen with the first input information input in the first input field by the OCR processing in a cleared state is displayed on the display device of the new input terminal, and the input of the first input information and the additional information to the VCD screen is received.

As a result, it is possible to cause the display device of the new input terminal to display the VCD screen in a state where the operator can easily perform the input if the additional information cannot be recognized by the second OCR processing if the additional information is necessary. As a result, while the workload of the operation of the new input terminal is reduced, the operator of the new input terminal is made to continue a simple repetition operation starting from the input of the first input information in a case where the additional information cannot be recognized, thereby the work efficiency of the operator can be prevented from being lowered.

Although some embodiments of the present invention have been described, these embodiments have been presented as examples, and are not intended to limit the scope of the invention. These novel embodiments can be implemented in various other forms, and various omissions, substitutions, and changes can be made without departing from the gist of the invention. These embodiments and modifications thereof are included in the scope and gist of the invention, and are included in the invention described in the claims and the equivalent scope thereof.

## Claims

1. An information processing apparatus comprising:
an image interface configured to acquire a display image including an image to be processed that an external apparatus causes a display apparatus to display;
an input interface configured to provide the external apparatus with a signal indicating input information for the display image;
an input terminal interface configured to be connected to an input terminal including a display device and an input device;
a recognition unit configured to recognize a character string in the image to be processed included in the display image acquired by the image interface; and
a processor configured to, in a case where additional information is necessary for first input information recognized from the image to be processed by the recognition unit, request the input terminal to input the first input information and input the additional information based on the image to be processed, and provide the external apparatus through the input interface with information indicating the first input information and the additional information input by the input terminal.

2. The information processing apparatus according to claim 1, wherein
the image interface is a capture board interface connected to a capture board that captures a display image including an image to be processed that the external apparatus causes a display apparatus to display.

3. The information processing apparatus according to any one of claim 1 or 2, wherein
the input interface is an emulator interface that is connected to an emulator that emulates a signal indicating input information for the display image as a signal input to an input apparatus and provides the external apparatus with the signal.

4. The information processing apparatus according to any one of claims 1 to 3, wherein
the first input information is an address in destination information,
the additional information is a recipient name in destination information,
the processor determines that a recipient name as additional information is necessary in a case where a person who moved out exists in an address recognized by the recognition unit from the image to be processed, requests the input terminal to input an address and a recipient name based on the image to be processed, and provides the external apparatus with an address and a recipient name input by the input terminal.

5. The information processing apparatus according to any one of claims 1 to 4, wherein
in a case where the additional information is requested from the external apparatus after providing the external device with a result of recognizing first input information from the image to be processed by the recognition unit, the processor requests the input terminal to input the first input information and input the additional information based on the image to be processed, and provides the external device with information indicating the first input information and the additional information input by the input terminal.

6. The information processing apparatus according to any one of claims 1 to 5, wherein
the processor is configured to:
cause the recognition unit to recognize the additional information in the image to be processed if the additional information is necessary;
if the recognition unit can recognize additional information, provide the external apparatus with the additional information based on a recognition result of the additional information; and
if the recognition unit cannot recognize additional information, request the input terminal to input the first input information and input the additional information based on the image to be processed, and provide the external apparatus with information indicating the first input information and the additional information input by the input terminal.

7. An information input system comprising a recognition apparatus, a display device and an operation device, wherein
the recognition apparatus comprises:
an image interface configured to acquire a display image including an image to be processed that an external apparatus causes a display apparatus to display;
an input interface configured to provide the external apparatus with a signal indicating input information for the display image;
a display device interface configured to be connected to the display device;
an operation device interface configured to communicate with the operation device;
a recognition unit configured to recognize a character string in the image to be processed included in the display image acquired by the image interface; and
a processor configured to, in a case where additional information is necessary for first input information recognized from the image to be processed by the recognition unit, cause the display device to display a screen requesting an input of the first input information and an input of the additional information in the image to be processed, and provide the external apparatus through the input interface with information indicating the first input information and the additional information input by the operation device.

8. The information input system according to claim 7, wherein
the image interface is a capture board interface connected to a capture board that captures a display image including an image to be processed that the external apparatus causes a display apparatus to display.

9. The information input system according to any one of claim 7 or 8, wherein
the input interface is an emulator interface that is connected to an emulator that emulates a signal indicating input information for the display image as a signal input to an input apparatus and provides the external apparatus with the signal.

10. The information input system according to any one of claims 7 to 9, wherein
the first input information is an address in destination information,
the additional information is a recipient name in destination information,
the processor determines that a recipient name as additional information is necessary in a case where a person who moved out exists in an address recognized by the recognition unit from the image to be processed, displays an input screen for an address and a recipient name based on the image to be processed on the display device, and provides the external apparatus with an address and a recipient name input by the operation device.

11. The information input system according to any one of claims 7 to 10, wherein
if the additional information is requested from the external apparatus after providing the external device with a result of recognizing first input information from the image to be processed by the recognition unit, the processor displays an input of the first input information and an input screen for the additional information based on the image to be processed on the display device, and provides the external device with information indicating the first input information and the additional information input by the operation device.

12. The information input system according to any one of claims 7 to 11, wherein
the processor is configured to:
cause the recognition unit to recognize the additional information in the image to be processed if the additional information is necessary;
if the recognition unit can recognize additional information, provide the external apparatus with the additional information based on a recognition result of the additional information; and
if the recognition unit cannot recognize additional information, display an input of the first input information and an input screen for the additional information based on the image to be processed on the display device, and provide the external apparatus with information indicating the first input information and the additional information input by the operation device.
